# EUROPEAN PATENT APPLICATION

(11) **EP 2 051 113 A1**
(43) Date of publication of application: **22.04.2009**
(21) Application number: 08018263.7
(22) Date of filing: 17.10.2008
(51) Int. Cl.: G02B 6/00, F21V 8/00, G02F 1/13357

(54) **Light guide plate**

(30) Priority: 19.10.2007 JP 2007272703
(71) Applicant: FUJIFILM Corporation, Minato-ku Tokyo (JP)
(72) Inventor: Iwasaki, Osamu, Fujinomiya-shi Shizuoka 418-0044 (JP); Nagano, Hideo, Fujinomiya-shi Shizuoka 418-0044 (JP)
(74) Representative: HOFFMANN EITLE

(57) **Abstract**

The light guide plate includes a rectangular light exit plane, a light entrance plane containing one side of the light exit plane, and a rear plane located on the side opposite from the light exit plane and scattering particles for scattering light propagating inside the light guide plate dispersed therein. The light guide plate has two layers, a first layer located on the side closer to the light exit plane and having a first particle density of the scattering particles, and a second layer located on the side opposite from the light exit plane and having a second particle density that is greater than the first particle density of the first layer. Npo and Npr satisfy Npo < Npr, where Npo is the first particle density and Npr is the second particle density.

## Description

The entire contents of documents cited in this specification are incorporated herein by reference.

### BACKGROUND OF THE INVENTION

The present invention relates to a light guide plate used for liquid crystal display devices and the like.

Liquid crystal display devices use a backlight unit for radiating light from behind the liquid crystal display panel to illuminate the liquid crystal display panel. A backlight unit is configured using a light guide plate for diffusing light emitted by an illuminating light source to irradiate the liquid crystal display panel and optical parts such as a prism sheet and a diffusion sheet for rendering the light emitted from the light guide plate uniform.

Currently, large liquid crystal televisions predominantly use a so-called direct illumination type backlight unit comprising a light guide plate disposed immediately above the illuminating light source (see, for example, JP 05-4133 U). This type of backlight unit comprises a plurality of cold cathode tubes serving as a light source provided behind the liquid crystal display panel whereas the inside of the backlight unit provides white reflection surfaces to ensure uniform light amount distribution and necessary brightness.

To achieve a uniform light amount distribution with a direct illumination type backlight unit, however, a thickness of about 30 mm in a direction perpendicular to the liquid crystal display panel is required, making further reduction of thickness difficult with the direct illumination type backlight unit.

Small liquid crystal monitors used in computers and the like, on the other hand, employ a backlight unit of a so-called side light type using a flat light guide plate to achieve smaller, thinner designs. Also proposed is a thin backlight unit of a type using a light guide plate of which the thickness decreases with the increasing distance from the light source such as, for example, a tandem type (see, for example, JP 02-208631 A, JP 11-288611 A, and JP 2001-312916 A).

Also proposed are a light guide plate having a greater thickness at the center thereof than at an end thereof at which light is admitted and the opposite end, a light guide plate having a reflection plane inclined in such a direction that the thickness of the light guide plate increases with the increasing distance from a part of the light guide plate at which light is admitted, and a light guide plate having a configuration such that the thickness of the light guide plate is greatest at a greatest distance from the location at which light is admitted. (See, for example, JP 2003-90919 A, JP 2004-171948 A, JP 2005-108676 A, and JP 2005-302322 A).

### SUMMARY OF THE INVENTION

A thin design may be achieved with backlight units such as the tandem type, of which the thickness decreases with the increasing distance from the light source as described in JP 05-4133 U, JP 02-208631 A, JP 11-288611 A, and JP 2001-312916 A, for example, and backlight units using a flat light guide plate. However, those backlight units yielded lower light use efficiency than the direct illumination type because of the relative dimensions of the cold cathode tube to the reflector. Further, where the light guide plate used is shaped to have grooves for receiving cold cathode tubes, although such a light guide plate could be shaped to have a thickness that decreases with the increasing distance from the cold cathode tube, if the light guide plate is made thinner, brightness at locations immediately above the cold cathode tube disposed in the grooves increased, thus causing uneven brightness on the light exit plane to stand out. In addition, all these light guide plates posed further problems: complex configurations leading to increased machining costs. Thus, a light guide plate of any of such types adapted to be used for a backlight unit for a large liquid crystal television having a screen size of say 37 inches or larger, in particular 50 inches or larger, was considerably expensive. JP 2003-90919 A, JP 2004-171948 A, JP 2005-108676 A, and JP 2005-302322 propose light guide plates growing thicker with the increasing distance from the light entrance plane to achieve stabler manufacturing or to limit brightness unevenness (unevenness in light amount) using multiple reflection. These light guide plates, made of a transparent material, allow light admitted from the light source to pass and leak through the opposite end and therefore need to be provided with prisms or dot patterns on the underside thereof.

Also proposed is a method whereby the light guide plate is provided with a reflection member near its light entrance plane on the opposite side from the light entrance plane to cause admitted light to undergo multiple reflection before allowing the light to exit through the light exit plane. To achieve a large light exit plane with these light guide plates by this method, however, the light guide plate needs to have an increased thickness, increasing weight and costs. Further, the light sources are projected into the light guide plate and perceived as such to cause uneven brightness and/or uneven illuminance.

An object of the present invention is to provide a light guide plate having a flat shape, yielding a high light use efficiency, capable of emitting light with a minimized unevenness in brightness and achieving a high-in-the-middle or bell-curve brightness distribution such that a central area of the screen is brighter than the periphery, thereby overcoming the problems associated with the prior art described above.

Another object of the invention is to provide a high-in-the-middle or bell-curve brightness distribution as required of thin, large-screen liquid crystal televisions in addition to the above object.

To solve the above problems, a first aspect of the invention is to provide a light guide plate comprising: a rectangular light exit plane; a light entrance plane containing a side of the light exit plane; a rear plane located on a side opposite from the light exit plane; and scattering particles for scattering light propagating inside the light guide plate, dispersed within the light guide plate, the light guide plate further comprising: a first layer positioned on a side closer to the light exit plane and having a first particle density of the scattering particles; and a second layer positioned on a side closer to the rear plane and having a second particle density of the scattering particles different from the first particle density of the first layer, wherein Npo and Npr satisfy Npo < Npr, where Npo is the first particle density of the scattering particles in the first layer and Npr is the second particle density of the scattering particles in the second layer.

Preferably, a combined particle density of the scattering particles differs in a direction perpendicular to the light entrance plane.

Preferably, the light entrance plane is provided on a longer side of the light exit plane.

Further, the light entrance plane is preferably provided on one side of the light exit plane.

Alternatively, the light guide plate preferably further comprises the other light entrance plane containing the other side of the light exit plane, wherein the light entrance plane and the other light entrance plane are provided on two opposite sides of the light exit plane, respectively.

To solve the above problems, a second aspect of the invention is to provide a light guide plate comprising: a light exit plane being flat and rectangular; two light entrance planes disposed opposite each other so as to contain two opposite longer sides of the light exit plane; respectively, a rear plane being symmetrical and being increasingly distanced from the light exit plane with an increasing distance from the two light entrance planes toward a center of the light exit plane; and scattering particles for scattering light propagating inside the light guide plate, dispersed within the light guide plate, the light guide plate further comprising: a first layer positioned on a side closer to the light exit plane and having a first particle density of the scattering particles; and a second layer positioned on a side closer to the rear plane and having a second particle density of the scattering particles different from the first particle density of the first layer, wherein Npo and Npr satisfy Npo < Npr, where Npo is the first particle density of the scattering particles in the first layer and Npr is the second particle density of the scattering particles in the second layer.

Preferably, the first layer and the second layer has an interface parallel to the light exit plane.

Further, sides of the interface between the first layer and the second layer are preferably located at boundaries between the light entrance planes and the rear plane.

Alternatively, two opposite sides of the interface between the first layer and the second layer are contained by the light entrance planes.

Alternatively, two opposite sides of the interface between the first layer and the second layer are contained by the rear plane.

Further, the rear plane preferably is comprised of two inclined planes connecting respectively with the light entrance planes and inclined with respect to the light exit plane.

Alternatively, the rear plane preferably comprises two inclined planes connecting respectively with the light entrance planes and inclined with respect to the light exit plane and a curved portion joining the two inclined planes.

Alternatively, the rear plane preferably comprises curves each represented by a part of an ellipse respectively connecting with the light entrance planes, straight lines respectively connecting with the curves each represented by a part of an ellipse, and a curve represented by a part of a circle connecting with the straight lines in a cross section perpendicular to a longitudinal direction of the light entrance planes.

Alternatively, the rear plane comprises curves each represented by a part of an ellipse respectively connecting with the light entrance planes and a curve represented by a part of a circle joining the curves each represented by a part of an ellipse in a cross section perpendicular to a longitudinal direction of the light entrance planes.

Further, when a thickness of the first layer is T1 and a thickness of the light guide plate at the light entrance planes is T2, the thickness T1 and the thickness T2 preferably satisfy 0.3 < T1/T2 < 2.

Further, the first and second particle densities Npo and Npr preferably satisfy 0wt% ≤ Npo ≤ 0.15 wt% and 0.008 wt% < Npr < 0.4 wt%.

Further, the first and second particle densities Npo and Npr preferably satisfy Npo = 0 and 0.015 wt% < Npr < 0.75 wt%.

The present invention achieves a large and thin light guide plate yielding a high light use efficiency, emitting light with a minimized unevenness in brightness and illuminance and a high-in-the-middle or bell-curve brightness distribution whereby the central area of the light exit plane is bright as compared with the periphery.

Further, the present invention also achieves a light guide plate capable of emitting light providing a high-in-the-middle or bell-curve brightness distribution as required by a thin, large-screen liquid crystal television.

### BRIEF DESCRIPTION OF THE DRAWINGS

These and other objects, features, and advantages of the present invention will be apparent from the following detailed description and accompanying drawings in which:
Fig. 1 is a schematic perspective view illustrating an embodiment of a liquid crystal display device using a planar lighting device of the invention using the light guide plate according to the invention.
Fig. 2 is a cross sectional view of the liquid crystal display device illustrated in Fig. 1 taken along line II-II.
Fig. 3A is a view of an example of the planar lighting device illustrated in Fig. 2 taken along line III-III; Fig. 3B is a cross sectional view of Fig. 3A taken along line B-B.
Fig. 4A is a perspective view schematically illustrating a configuration of the light source used in the planar lighting device of Figs. 1 and 2; Fig. 4B is a cross sectional view of the light source illustrated in Fig. 4A; and Fig. 4C is a schematic perspective view illustrating one LED of the light source of Fig. 4A as enlarged.
Fig. 5 is a schematic perspective view illustrating a shape of the inventive light guide plate.
Fig. 6 is a graph illustrating measurements of relative illuminance distributions of light emitted through the light exit plane of the inventive light guide plate.
Fig. 7 is a graph illustrating measurements of relative illuminance distributions of light emitted through the light exit plane of the inventive light guide plate.
Fig. 8 is a graph illustrating relationships between particle density of the light guide plate on the one hand and light use efficiency and middle-high ratio observed in the light emitted through the light exit plane of the light guide plate, respectively.
Figs. 9A and 9B are schematic sectional views illustrating other examples of the planar lighting device using the light guide plate of the invention.
Figs. 10A to 10C are schematic sectional views illustrating other examples of the planar lighting device using the light guide plate of the invention.
Fig. 11 is a graph illustrating measurements of relative illuminance distribution of light emitted through the light exit plane of the light guide plate.
Fig. 12 is a graph illustrating measurements of relative illuminance distribution of light emitted through the light exit plane of the light guide plate.
Figs. 13A to 13C are schematic sectional views illustrating other examples of the planar lighting device using the light guide plate of the invention.
Fig. 14 is a schematic sectional view illustrating another example of the light guide plate of the invention

### DETAILED DESCRIPTION OF THE INVENTION

Now, a planar lighting device using the light guide plate according to the invention will be described in detail referring to the preferred embodiments illustrated in the attached drawings.

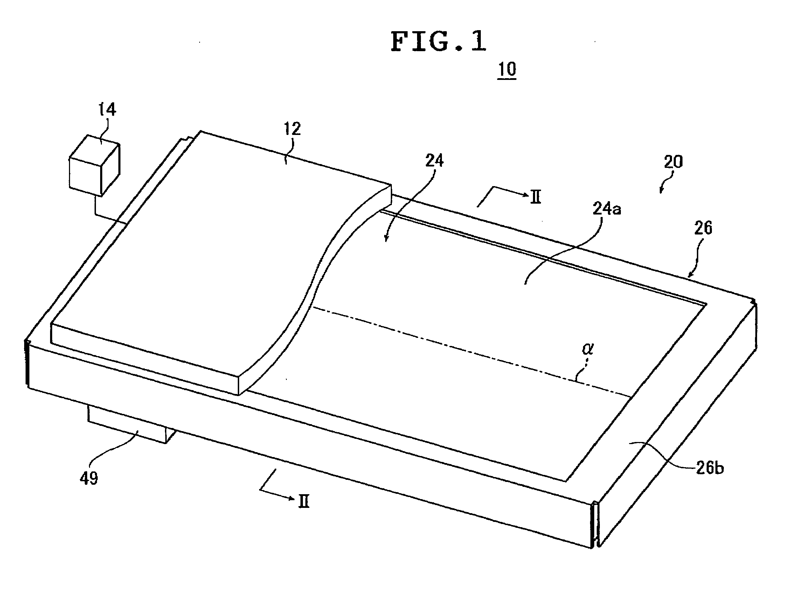

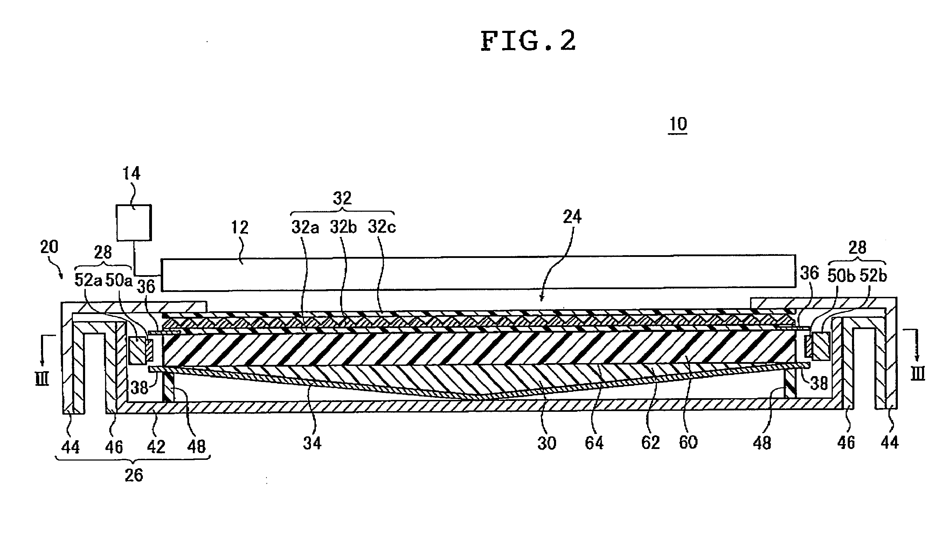

Fig. 1 is a schematic perspective view illustrating a liquid crystal display device provided with a planar lighting device using the light guide plate according to the invention; Fig. 2 is a cross sectional view of the liquid crystal display device illustrated in Fig. 1 taken along line II-II.

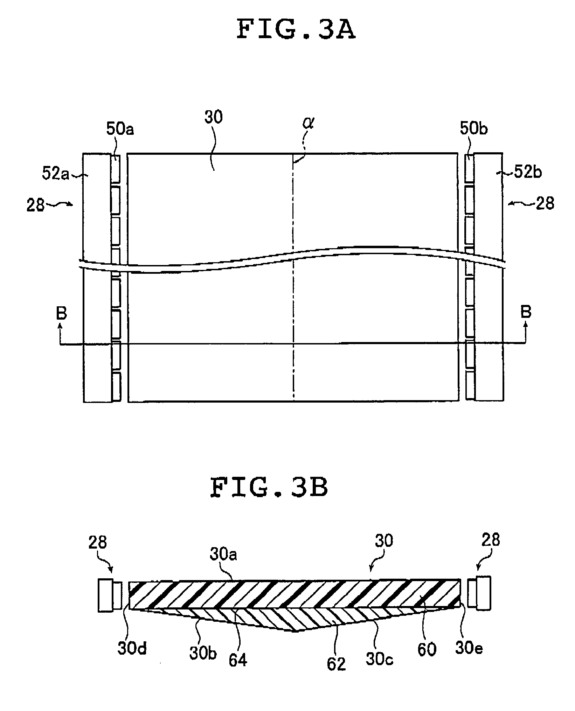

Fig. 3A is a view of an example of the planar lighting device (also referred to as "backlight unit" below) illustrated in Fig. 2 taken along line III-III; Fig. 3B is a cross sectional view of Fig. 3A taken along line B-B.

A liquid crystal display device 10 comprises a backlight unit 20, a liquid crystal display panel 12 disposed on the side of the backlight unit closer to the light exit plane, and a drive unit 14 for driving the liquid crystal display panel 12. In Fig. 1, part of the liquid crystal display panel 12 is not shown to better illustrate the configuration of the planar lighting device.

In the liquid crystal display panel 12, electric field is partially applied to liquid crystal molecules, previously arranged in a given direction, to change the orientation of the molecules. The resultant changes in refractive index in the liquid crystal cells are used to display characters, figures, images, etc., on the liquid crystal display panel 12.

The drive unit 14 applies a voltage to transparent electrodes in the liquid crystal display panel 12 to change the orientation of the liquid crystal molecules, thereby controlling the transmittance of the light transmitted through the liquid crystal display panel 12.

The backlight unit 20 is a lighting device for illuminating the whole surface of the liquid crystal display panel 12 from behind the liquid crystal display panel 12 and comprises a light exit plane having substantially a same shape as an image display surface of the liquid crystal display panel 12.

As illustrated in Figs. 1, 2, 3A and 3B, the first example of the backlight unit 20 comprises a main body of the lighting device 24 and a housing 26. The main body of the lighting device 24 comprises two light sources 28, a light guide plate 30, and an optical member unit 32. The housing 26 comprises a lower housing 42, an upper housing 44, turnup members 46, and support members 48. As illustrated in Fig. 1, a power unit casing 49 is provided on the underside of the lower housing 42 of the housing 26 to hold power supply units that supply the light sources 28 with electrical power.

Now, components that make up the backlight unit 20 will be described.

The main body of the lighting device 24 comprises the light sources 28 for emitting light, the light guide plate 30 for admitting the light emitted by the light sources 28 to produce planar light, and the optical member unit 32 for scattering and diffusing the light produced by the light guide plate 30 to obtain light with further reduced unevenness.

First, the light sources 28 will be described.

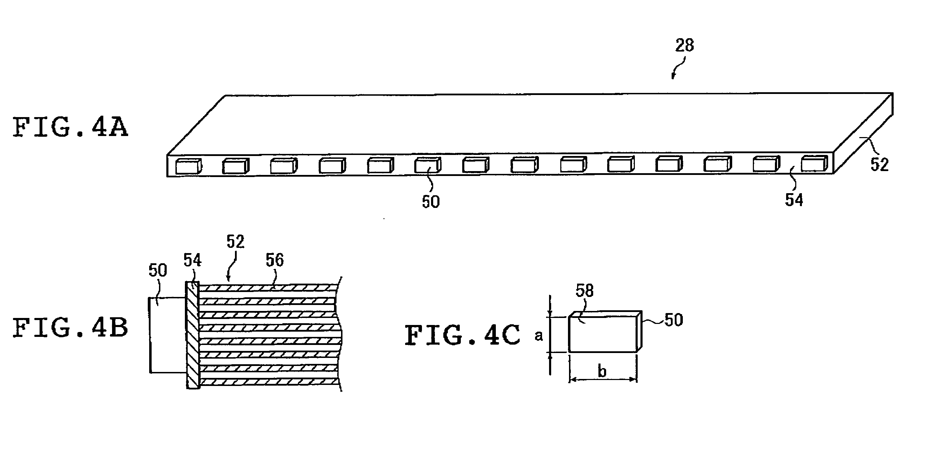

Fig. 4A is a perspective view schematically illustrating a configuration of the light sources 28 of the planar lighting device 20 of Figs. 1 and 2; Fig. 4B is a cross sectional view of the light source 28 illustrated in Fig. 4A; and Fig. 4C is a schematic perspective view illustrating only one LED of the light source 28 of Fig. 4A as enlarged.

As illustrated in Fig. 4A, the light source 28 comprises light emitting diode chips (referred to as "LED chips" below) 50 and a light source mount 52.

The LED chip 50 is a chip of a light emitting diode emitting blue light the surface of which has a fluorescent substance applied thereon. It has a light emission face 58 with a given area through which white light is emitted.

Specifically, when blue light emitted through the surface of light emitting diode of the LED chip 50 is transmitted through the fluorescent substance, the fluorescent substance generates fluorescence. Thus, when blue light emitted by the LED chip 50 is transmitted through the fluorescent substance, the blue light emitted by the light emitting diode and the light radiated as the fluorescent substance generates fluorescence blend to produce and emit white light.

The LED chip 50 may for example be formed by applying a YAG (yttrium aluminum garnet) base fluorescent substance to the surface of a GaN base light emitting diode, an InGaN base light emitting diode, etc.

As illustrated in Fig. 4B, the light source mount 52 comprises an array base 54 and fins 56. The LED chips 50 described above are arranged in a single row on the array base 54 at given intervals depending on where they are located. Specifically, the LED chips 50 constituting the light source 28 are arrayed along the length of a first light entrance plane 30d or a second light entrance plane 30e of a light guide plate 30 to be described, that is, parallel to a line in which the first light entrance plane 30d or the second light entrance plane 30e meets with a light exit plane 30a and secured to the array base 54.

The array base 54 is a plate member disposed such that one surface thereof faces the corresponding one of the lateral end faces of the light guide plate 30, where the light guide plate 30 is thinnest, i.e., the first light entrance plane 30d or the second light entrance plane 30e. The LED chips 50 are carried on a lateral plane of the array bases 54 facing the respective light entrance planes 30d and 30e of the light guide plate 30.

The array base 54 according to the embodiment under discussion is formed of a metal having a good heat conductance as exemplified by copper and aluminum. The array base 54 also acts as a heat sink to absorb heat generated by the LED chips 50 and releases the heat to the outside.

The fins 56 are plate members each formed of a metal having a good heat conductance as exemplified by copper and aluminum. The fins 56 are connected to the array base 54 on the side thereof opposite from the LED chips 50 and spaced a given distance from neighboring fins 56.

A plurality of fins 56 provided in the light source mount 52 ensures a large surface area and a high heat dissipation efficiency, increasing the efficiency with which the LED chips 50 are cooled.

The heat sink may be not only of air-cooled type but also of water-cooled type.

While the embodiment under discussion uses the array base 54 of the light source mount 52 as heat sink, a plate member without a heat-releasing function may be used to form the array base in place of the array base having a function of a heat sink, where the LED chips need not be cooled.

As illustrated in Fig. 4C, the LED chips 50 of the embodiment under discussion each have a rectangular shape such that the sides perpendicular to the direction in which the LED chips 50 are arrayed are shorter than the sides lying in the direction in which the LED chips 50 are arrayed or, in other words, the sides lying in the direction of thickness of the light guide plate 30 to be described, i.e., the direction perpendicular to the light exit plane 30a, are the shorter sides. Expressed otherwise, the LED chips 50 each have a shape defined by b > a where "a" denotes the length of the sides perpendicular to the light exit plane 30a of the light guide plate 30 and "b" denotes the length of the sides in the array direction. Now, let "q" be the distance by which the arrayed LED chips 50 are spaced apart from each other, then q > b hold. Thus, the length "a" of the sides of the LED chips 50 perpendicular to the light exit plane 30a of the light guide plate 30, the length "b" of the sides in the array direction, and the distance "q" by which the arrayed LED chips 50 are spaced apart from each other preferably have a relationship satisfying q > b > a.

Providing the LED chips 50 each having the shape of a rectangle allows a thinner design of the light source to be achieved while producing a large amount of light. A thinner light source, in turn, enables a thinner design of the planar lighting device to be achieved. Further, the number of LED chips that need to be arranged may be reduced.

While the LED chips 50 each preferably have a rectangular shape with the shorter sides lying in the direction of the thickness of the light guide plate 30 for a thinner design of the light source, the present invention is not limited thereto, allowing the LED chips to have any shape as appropriate such as a square, a circle, a polygon, and an ellipse.

While the LED chips, arranged in a single row, has a monolayered structure in the embodiment under discussion, the present invention is not limited thereto; one may use multilayered LED arrays for the light source comprising LED arrays each carrying LED chips 50 on the array base 54. Where the LEDs are thus stacked, more LED arrays can be stacked when the LED chips 50 are each adapted to have a rectangular shape and when the LED arrays are each adapted to have a reduced thickness. Where the LED arrays are stacked to form a multilayer structure, that is to say, where more LED arrays (LED chips) are packed into a given space, a large amount of light can be generated. Preferably, the above expression also applies to the distance separating the LED chips of an LED array from the LED chips of the LED arrays in adjacent layers. Expressed otherwise, the LED arrays preferably are stacked such that the LED chips are spaced a given distance apart from the LED chips of the LED arrays in adjacent layers.

Now, the light guide plate 30 will be described.

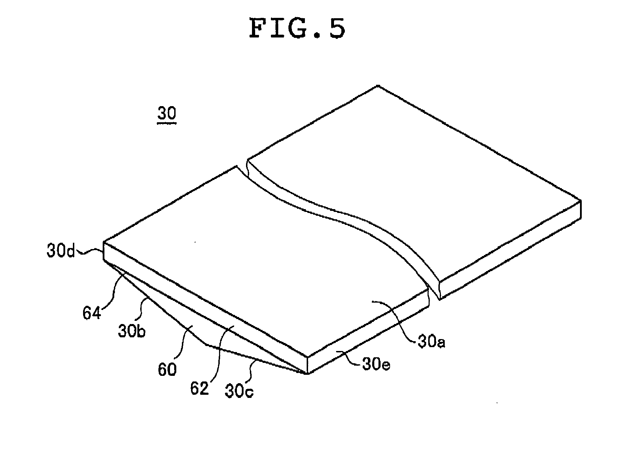

Fig. 5 is a perspective view schematically illustrating the configuration of the light guide plate 30.

As illustrated in Figs. 2, 3, and 5, the light guide plate 30 comprises the light exit plane 30a, which is flat and substantially rectangular; two light entrance planes, the first light entrance plane 30d and the second light entrance plane 30e, formed on both sides of the light exit plane 30a and substantially perpendicular to the light exit plane 30a; and two inclined planes, a first inclined plane 30b and a second inclined plane 30c, located on the opposite side from the light exit plane 30a, i.e., on the underside of the light guide plate so as to be symmetrical to each other with respect to a central axis, or the bisector α bisecting the light exit plane 30a (see Figs. 1 and 3) in a direction parallel to the first light entrance plane 30d and the second light entrance plane 30e, and inclined a given angle with respect to the light exit plane 30a.

The first inclined plane 30b and the second inclined plane 30c are so inclined as to be distanced farther from the light exit plane 30a with the increasing distance from the first light entrance plane 30d and the second light entrance plane 30e, respectively: expressed otherwise, the thickness of the light guide plate 30 in the direction perpendicular to the light exit plane 30a increases from the first light entrance plane 30d and the second light entrance plane 30e toward the center of the light guide plate 30.

Thus, the light guide plate 30 is thinnest at both sides thereof, i.e., at the first light entrance plane 30d and the second light entrance plane 30e, and thickest at the center, i.e., on the bisector α, where the first inclined plane 30b and the second inclined plane 30c meet. Expressed otherwise, the light guide plate 30 has such a configuration that the thickness of the light guide plate 30 in the direction perpendicular to the light exit plane 30a increases with the increasing distance from the first light entrance plane 30d or the second light entrance plane 30e. The inclination angle of the first inclined plane 30b and the second inclined plane 30c with respect to the light exit plane 30a is not specifically limited.

The two light sources 28 mentioned above are disposed opposite the first light entrance plane 30d and the second light entrance plane 30e of the light guide plate 30, respectively. Specifically, one of the light sources 28 comprising LED chips 50a and a light source mount 52a is disposed opposite the first light entrance plane 30d and the other light source 28 comprising LED chips 50b and a light source mount 52b is disposed opposite the second light entrance plane 30e. In the embodiment under discussion, the light emission face 58 of the LED chips 50 of the light sources 28 has substantially the same length as the first light entrance plane 30d and the second light entrance plane 30e in the direction perpendicular to the light exit plane 30a.

Thus, the planar lighting device 20 has the two major light sources 28 disposed in such a manner as to sandwich the light guide plate 30. In other words, the light guide plate 30 is placed between the two major light sources 28 arranged opposite each other with a given distance between them.

The light guide plate 30 is formed of a transparent resin into which scattering particles are kneaded and dispersed. Transparent resin materials that may be used to form the light guide plate 30 include optically transparent resins such as PET (polyethylene terephthalate), PP (polypropylene), PC (polycarbonate), PMMA (polymethyl methacrylate), benzyl methacrylate, MS resins, and COP (cycloolefin polymer). The scattering particles kneaded and dispersed into the light guide plate 30 may be formed, for example, of TOSPEARL (trademark), silicone, silica, zirconia, or a derivative polymer.

The light guide plate 30 is formed with a two-layer structure: a first layer 60 located on the side closer to the light exit plane 30a and a second layer 62 located on the side closer to the first inclined plane 30b and the second inclined plane 30c. Specifically, the first layer 60 located on the side closer to the light exit plane 30a defines a sectionally rectangular region having the same thickness as the first light entrance plane 30d and the second light entrance plane 30e, and the second layer 62 located on the side closer to the first inclined plane 30b and the second inclined plane 30c defines a region having a triangular cross section formed by a plane containing the side of each of the first light entrance plane 30d and the second light entrance plane 30e opposite from the light exit plane 30a (i.e., the side of each light entrance plane closer to the corresponding inclined plane) and the first inclined plane 30b and the second inclined plane 30c. Expressed otherwise, the first layer 60 defines a layer located on one side of an interface 64 closer to the light exit plane 30a and the second layer 62 defines the other layer located on the other side closer to the first inclined plane 30b and the second inclined plane 30c, the interface 64 being a plane including the side of each of the first light entrance plane 30d and the second light entrance plane 30e located opposite from the light exit plane 30a.

Although the light guide plate 30 is divided into the first layer 60 and the second layer 62, the first layer 60 and the second layer 62 are both formed of the same transparent resin and containing the same scattering particles dispersed therein, the only difference being the density of the scattering particles. Accordingly, the light guide plate has a one-piece structure. That is, the light guide plate 30 has different particle densities in the respective layers on both sides of the interface 64 but the interface 64 is a virtual plane such that the first layer 60 and the second layer 62 are integral with each other.

Now, let Npo be the particle density of the scattering particles in the first layer 60 and Npr the particle density of the scattering particles in the second layer 62. Then Npo and Npr have a relationship expressed by Npo < Npr. Thus, the light guide plate 30 has a higher particle density of scattering particles in the second layer 62 than in the first layer 60.

The light guide plate 30, adapted to contain different scattering particles in different regions thereof, is capable of emitting illumination light having a high-in-the-middle brightness distribution with a minimized unevenness in brightness and illuminance. The light guide plate 30 so formed may be manufactured using a two-layer extrusion molding method or an injection molding method.

The brightness distribution and the illuminance distribution of the light guide plate according to the invention basically share similar tendencies and so do brightness unevenness and illuminance unevenness. Thus, illuminance unevenness is also observed where brightness unevenness appears such that they share similar tendencies.

In the light guide plate 30 illustrated in Fig. 2, light emitted from the light sources 28 and entering the light guide plate 30 through the first light entrance plane 30d and the second light entrance plane 30e is scattered as it travels through the inside of the light guide plate 30 by scatterers contained inside the light guide plate 30 and, directly or after being reflected by the first inclined plane 30b or the second inclined plane 30c, exits through the light exit plane 30a. Some light can in the process leak through the first inclined plane 30b and the second inclined plane 30c. However, it is then reflected by the reflection plate 34 provided on the side of the light guide plate closer to the first inclined plane 30b and the second inclined plane 30c to enter the light guide plate 30 again. The reflection plate 34 will be described later in detail.

The shape of the light guide plate thus growing thicker in the direction perpendicular to the light exit plane 30a with the increasing distance from the first light entrance plane 30d or the second light entrance plane 30e opposite which the light source 28 is disposed allows the light admitted through the light entrance planes to travel farther from the light entrance planes and, hence, enables a larger light exit plane to be achieved. Moreover, since the light entering through the light entrance plane is advantageously guided to travel a long distance from the light entrance plane, a thinner design of the light guide plate is made possible.

The configuration of the light guide plate 30 having different particle densities in the first layer 60 and the second layer 62, respectively, such that the particle density in the first layer 60 located on the side closer to the light exit plane is lower than the particle density in the second layer 62 achieves a more accentuated high-in-the-middle brightness distribution than in the case of a light guide plate having a single particle density, that is, a light guide plate where particles are dispersed evenly with a uniform density throughout therein.

Specifically, when the relationship between the particle density Npo of the scattering particles in the first layer 60 and the particle density Npr of the scattering particles in the second layer 62 satisfies Npo < Npr as in the embodiment under discussion, a combined particle density of the scattering particles gradually increases with the increasing distance from the light entrance planes (toward the center of the two light entrance planes). Accordingly, light reflected by the effects of the scattering particles toward the light exit plane increases with the increasing distance from the light entrance planes, with the result that the illuminance distribution that is high in the middle with an optimum proportion can be obtained. In other words, similar effects can be obtained to those produced with a flat light guide plate providing a scattering particle density distribution in the optical axis direction. In addition, adjustment of the shape of the rear plane permits setting the brightness distribution (scattering particle density distribution) as desired, improving the efficiency to a maximum extent.

Note that the combined particle density herein denotes a density of scattering particles expressed using an amount of scattering particles added or combined in a direction perpendicular to the light exit plane at a position spaced apart from one light entrance plane toward the other on the assumption that the light guide plate is a flat plate of which the thickness is a thickness at the light entrance planes throughout the light guide plate. In other words, it denotes an amount of scattering particles in unit volume or a weight percentage of the scattering particles in relation to the base material added in a direction perpendicular to the light exit plane at a position spaced apart from a light entrance plane on the assumption that the light guide plate is a flat plate of which the thickness is a thickness at the light entrance planes throughout the light guide plate.

Further, the light use efficiency can also be substantially as high as or higher than that obtained with a light guide plate having a single particle density. Thus, the light guide plate of the invention is capable of emitting light having an illuminance distribution and a brightness distribution representing a more accentuated high-in-the-middle curve than the light guide plate having a single particle density while keeping the light use efficiency substantially as high as that achieved by the light guide plate having a single particle density.

Further, it is preferable that the relationship between the particle density Npo of the scattering particles in the first layer 60 and the particle density Npr of the scattering particles in the second layer 62 satisfies 0 wt% ≤ Npo ≤ 0.15 wt % and 0.008 wt % < Npr < 0.4 wt%.

The first layer 60 and the second layer 62 of the light guide plate 30 adapted to satisfy the above relationship enable an illuminance distribution representing a high-in-the-middle curve with an optimum proportion to be achieved while further enhancing the light use efficiency.

The particle density herein denotes a ratio of the weight of the scattering particles to the weight of the base material.

Further, it is also preferable that the relationship between the particle density Npo of the scattering particles in the first layer 60 and the particle density Npr of the scattering particles in the second layer 62 satisfies Npo = 0 and 0.015 wt% < Npr < 0.75 wt%.

The particle density Npo of the scattering particles in the first layer 60 and the particle density Npr of the scattering particles in the second layer 62 adapted to satisfy the above relationship enable an illuminance distribution representing a high-in-the-middle curve with an optimum proportion to be achieved while further enhancing the light use efficiency.

Further, when T1 is the thickness of the first layer and T2 the thickness of the first light entrance plane and the second light entrance plane, the relationship between the thickness T1 and the thickness T2 preferably satisfies 0.3 < T1/T2 < 2.0.

When the first layer located on the side closer to the light exit plane having a lower particle density is adapted to have a thickness within the above range, the light emitted from the LED chips can be allowed to efficiently propagate deep into the light guide plate, i.e., to a position far from the light entrance plane in the optical axis direction.

Next, the optical member unit 32 will be described.

The optical member unit 32 is provided to reduce the brightness unevenness and illuminance unevenness of the illumination light emitted through the light exit plane 30a of the light guide plate 30 to achieve emission of light with reduced brightness unevenness through a light emission plane 24a of the main body of the lighting device 24. As illustrated in Fig. 2, the optical member unit 32 comprises a diffusion sheet 32a for diffusing the illumination light emitted through the light exit plane 30a of the light guide plate 30 to reduce brightness unevenness and illuminance unevenness, a prism sheet 32b having micro prism arrays formed parallel to the lines where the light exit plane and the light entrance planes meet, and a diffusion sheet 32c for diffusing the illumination light emitted through the prism sheet 32b to reduce brightness unevenness.

There is no specific limitation to the diffusion sheets 32a and 32c and the prism sheet 32b; known diffusion sheets and a known prism sheet may be used. For example, use may be made of the diffusion sheets and the prism sheets disclosed in paragraphs [0028] through [0033] of JP 2005-234397 A by the Applicant of the present application.

While the optical member unit in the embodiment under discussion comprises the two diffusion sheets 32a and 32c and the prism sheet 32b between the two diffusion sheets, there is no specific limitation to the order in which the prism sheet and the diffusion sheets are arranged or the number thereof to be provided. Nor are the prism sheet and the diffusion sheets specifically limited, and use may be made of various optical members, provided that they are capable of reducing the brightness unevenness and illuminance unevenness of the illumination light emitted through the light exit plane 30a of the light guide plate 30.

For example, the optical members may also be formed of transmittance adjusting members each comprising a number of transmittance adjusters consisting of diffusion reflectors distributed according to the brightness unevenness and the illuminance unevenness in addition to or in place of the diffusion sheets and the prism sheet described above. Further, the optical member unit may be adapted to have two layers formed using one sheet each of the prism sheet and the diffusion sheet or two diffusion sheets only.

Now, the reflection plate 34 of the main body of the lighting device will be described.

The reflection plate 34 is provided to reflect light leaking through the first inclined plane 30b and the second inclined plane 30c of the light guide plate 30 back into the light guide plate 30 and helps enhance the light use efficiency. The reflection plate 34 is shaped according to the contour of the first inclined plane 30b and the second inclined plane 30c of the light guide plate 30 to cover the first inclined plane 30b and the second inclined plane 30c. In the embodiment under discussion, the reflection plate 34 is shaped to contour the sectionally triangular shape formed by the first inclined plane 30b and the second inclined plane 30c as illustrated in Fig. 2.

The reflection plate 34 may be formed of any material as desired, provided that it is capable of reflecting light leaking through the inclined planes of the light guide plate 30. The reflection plate 34 may be formed, for example, of a resin sheet produced by kneading, for example, PET or PP (polypropylene) with a filler and then drawing the resultant mixture to form voids therein for increased reflectance; a sheet with a specular surface formed by, for example, depositing aluminum vapor on the surface of a transparent or white resin sheet; a metal foil such as an aluminum foil or a resin sheet carrying a metal foil; or a thin sheet metal having a sufficient reflective property on the surface.

Upper light guide reflection plates 36 are disposed between the light guide plate 30 and the diffusion sheet 32a, i.e., on the side of the light guide plate 30 closer to the light exit plane 30a, covering the light sources 28 and the end portions of the light exit plane 30a, i.e., the end portion thereof closer to the first light entrance plane 30d and the end portion thereof closer to the second light entrance plane 30e. Thus, the upper light guide reflection plates 36 are disposed to cover an area extending from part of the light exit plane 30a of the light guide plate 30 as far as part of the array bases 54 of the light sources 28 in a direction parallel to the direction of the optical axis. Briefly, two upper light guide reflection plates 36 are disposed respectively on both end portions of the light guide plate 30.

The upper light guide reflection plates 36 thus provided prevents light emitted by the light sources 28 from leaking toward the light exit plane 30a instead of entering the light guide plate 30.

Thus, light emitted from the LED chips 50 of the light sources 28 is efficiently admitted through the first light entrance plane 30d and the second light entrance plane 30e of the light guide plate 30, increasing the light use efficiency.

The lower light guide reflection plates 38 are disposed on the side of the light guide plate 30 opposite from the light exit plane 30a, i.e., on the same side as the first inclined plane 30b and the second inclined plane 30c, covering part of the light sources 28. The ends of the lower light guide reflection plates 38 closer to the center of the light guide plate 30 are connected to the reflection plate 34.

The upper light guide reflection plates 36 and the lower light guide reflection plates 38 may be formed of any of the above-mentioned materials used to form the reflection plate 34.

The lower light guide reflection plates 38 prevent light emitted by the light sources 28 from leaking toward the first inclined plane 30b and the second inclined plane 30c of the light guide plate 30 instead of entering the light guide plate 30.

Thus, light emitted from the LED chips 50 of the light sources 28 is efficiently admitted through the first light entrance plane 30d and the second light entrance plane 30e of the light guide plate 30, increasing the light use efficiency.

While the reflection plate 34 is connected to the lower light guide reflection plates 38 in the embodiment under discussion, their configuration is not so limited; they may be formed of separate materials.

The shapes and the widths of the upper light guide reflection plates 36 and the lower light guide reflection plates 38 are not limited specifically, provided that light emitted by the light sources 28 is reflected and directed toward the first light entrance plane 30d or the second light entrance plane 30e such that light emitted by the light sources 28 can be admitted through the first light entrance plane 30d or the second light entrance plane 30e and then guided toward the center of the light guide plate 30.

While, in the embodiment under discussion, the upper light guide reflection plates 36 are disposed between the light guide plate 30 and the diffusion sheet 32a, the location of the upper light guide reflection plates 36 is not so limited; it may be disposed between the sheets constituting the optical member unit 32 or between the optical member unit 32 and the upper housing 44.

Next, the housing 26 will be described.

As illustrated in Fig. 2, the housing 26 accommodates and secures therein the main body of the lighting device 24 by holding it from above and both sides thereof, i.e., the light emission plane 24a and the first inclined plane 30b and the second inclined plane 30c. The housing 26 comprises the lower housing 42, the upper housing 44, the turnup members 46, and the support members 48.

The lower housing 42 is open at the top and has a configuration comprising a bottom section and lateral sections provided upright on the four sides of the bottom section. Briefly, it has substantially the shape of a rectangular box open on one side. As illustrated in Fig. 2, the bottom section and the lateral sections support the main body of the lighting device 24 placed therein from above on the underside and on the lateral sides and covers the faces of the main body of the lighting device 24 except the light emission plane 24a, i.e., the plane opposite from the light emission plane 24a of the main body of the lighting device 24 (rear side) and the lateral sections.

The upper housing 44 has the shape of a rectangular box; it has an opening at the top smaller than the rectangular light emission plane 24a of the main body of the lighting device 24 and is open on the bottom side.

As illustrated in Fig. 2, the upper housing 44 is placed from above the main body of the lighting device 24 and the lower housing 42, that is, from the light exit plane side, to cover the main body of the lighting device 24 and the lower housing 42, which holds the former, as well as four lateral sections 22b.

The turnup members 46 have a substantially U-shaped sectional profile that is identical throughout their length. That is, each turnup member 46 is a bar-shaped member having a U-shaped profile in cross section perpendicular to the direction in which it extends.

As illustrated in Fig. 2, the turnup members 46 are fitted between the lateral sections of the lower housing 42 and the lateral sections of the upper housing 44 such that the outer face of one of the parallel sections of aforementioned U shape connects with lateral sections 22b of the lower housing 42 whereas the outer face of the other parallel section connects with the lateral sections of the upper housing 44.

To connect the lower housing 42 with the turnup members 46 and the turnup members 46 with the upper housing 44, one may use any known method such as a method using bolts and nuts and a method using bonds.

Thus providing the turnup members 46 between the lower housing 42 and the upper housing 44 increases the rigidity of the housing 26 and prevents the light guide plate from warping. As a result, for example, light can be efficiently emitted without, or with a minimized level of, brightness unevenness or illuminance unevenness. Further, even where the light guide plate used is liable to develop a warp, the warp can be corrected with an increased certainty or the warping of the light guide plate can be prevented with an increased certainty, thereby allowing light to be emitted through the light exit plane without brightness unevenness or with a greatly reduced level of brightness unevenness.

The upper housing, the lower housing and the turnup members of the housing may be formed of various materials including metals and resins but lightweight, high-rigidity materials are preferable.

While the turnup members are discretely provided in the embodiment under discussion, they may be integrated with the upper housing or the lower housing. Alternatively, the configuration may be formed without the turnup members.

The support members 48 have an identical profile in cross section perpendicular to the direction in which they extend throughout their length. That is, each support member 48 is a bar-shaped member having an identical cross section perpendicular to the direction in which it extends.

As illustrated in Fig. 2, the support members 48 are provided between the reflection plate 34 and the lower housing 42, more specifically, between the reflection plate 34 and the lower housing 42 close to the end of the first inclined plane 30b of the light guide plate 30 on which the first light entrance plane 30d is located-and close to the end of the second inclined plane 30c of the light guide plate 30 on which the second light entrance plane 30e is provided. The support members 48 thus secure the light guide plate 30 and the reflection plate 34 to the lower housing 42 and support them.

With the support members 48 supporting the reflection plate 34, the light guide plate 30 and the reflection plate 34 can be brought into a close contact. Furthermore, the light guide plate 30 and the reflection plate 34 can be secured to a given position of the lower housing 42.

While the support members are discretely provided in the embodiment under discussion, the invention is not limited thereto; they may be integrated with the lower housing 42 or the reflection plate 34. To be more specific, the lower housing 42 may be adapted to have projections to serve as support members or the reflection plates may be adapted to have projections to serve as support members.

The locations of the support members are also not limited specifically and they may be located anywhere between the reflection plate and the lower housing. To stably hold the light guide plate, the support members are preferably located closer to the ends of the light guide plate or, in the embodiment under discussion, near the first light entrance plane 30d and the second light entrance plane 30e.

The support members 48 may be given various shapes and formed of various materials without specific limitations. For example, two or more of the support members may be provided at given intervals.

Further, the support members may have such a shape as to fill the space formed by the reflection plate and the lower housing. Specifically, the support members may have a shape such that the side thereof facing the reflection plate has a contour following the surface of the reflection plate and the side thereof facing the lower housing has a contour following the surface of the lower housing. Where the support members are adapted to support the whole surface of the reflection plates, separation of the light guide plate and the reflection plate can be positively prevented and, further, generation of brightness unevenness that might otherwise be caused by light reflected by the reflection plates can be prevented.

The planar lighting device 20 is basically configured as described above.

In the planar lighting device 20, light emitted by the light sources 28 provided on both sides of the light guide plate 30 strikes the light entrance planes, i.e., the first light entrance plane 30d and the second light entrance plane 30e, of the light guide plate 30. Then, the light admitted through the light entrance planes is scattered by scatterers contained inside the light guide plate 30 as will be described later in detail as the light travels through the inside of the light guide plate 30 and, directly or after being reflected by the first inclined plane 30b or the second inclined plane 30c, exits through the light exit plane 30a. In the process, part of the light leaking through the first inclined plane 30b and the second inclined plane 30c is reflected by the reflection plate 34 to enter the light guide plate 30 again.

Thus, light emitted through the light exit plane 30a of the light guide plate 30 is transmitted through the optical member 32 and emitted through the light emission plane 24a of the main body of the lighting device 24 to illuminate the liquid crystal display panel 12.

The liquid crystal display panel 12 uses the drive unit 14 to control the transmittance of the light according to the position so as to display characters, figures, images, etc. on its surface.

Now, the planar lighting device 20 will be described in greater detail by referring to specific examples.

The light guide plate used for an example described below had a following configuration: the length from the first light entrance plane 30b to the second light entrance plane 30c measured 545 mm; the length from the light exit plane 30a to the rear plane at the bisector α or, a maximum thickness D of the light guide plate, measured 3.6 mm; and the thickness of the light guide plate at the first light entrance plane 30d and the second light entrance plane 30e, i.e., a minimum thickness of the light guide plate, measured 2.0 mm. The interface 64 lying between the first layer 60 and the second layer 62 was the plane containing the side of the first light entrance plane 30d closer to the first inclined plane 30b and the side of the second light entrance plane 30e closer to the second inclined plane 30c.

The light guide plate having the above configuration was used to measure relative illuminance distribution, middle-high ratio, and light use efficiency by varying the particle density Npr of the second layer 62 to various values, specifically, 0.046 wt%, 0.063 wt%, 0.079 wt%, 0.096 wt%, 0.113 wt%, and 0.129 wt%, with the particle density Npo of the first layer 60 fixed to 0 wt%. By way of reference, measurements were also made using a light guide plate having a single particle density of 0.046 wt% in both the first layer 60 and the second layer 62, that is, a light guide plate containing scattering particles dispersed therein at a consistent density throughout.

The middle-high ratio herein denotes a value obtained by dividing a minimum brightness by a maximum brightness of light emitted through the light exit plane, or minimum brightness/maximum brightness. When the value of minimum brightness/maximum brightness is small, meaning that the difference between minimum brightness and maximum brightness is great, the middle-high ratio is described as high herein. Because an area where brightness increases steeply close to where light is admitted is covered with a reflection member in actual use and, hence, light emitted through such an area is not allowed to exit through the corresponding area of the planar lighting device, light striking such an area of the light guide plate is not recognized as light producing uneven brightness and not recognized as light emitted through the light exit plane. Accordingly, light emitted through such an area of the light guide plate was disregarded.

The light use efficiency herein denotes the sum of intensity of light emitted through the entire light exit plane of the light guide plate expressed in percentage as compared with the reference taken to be 100 %.

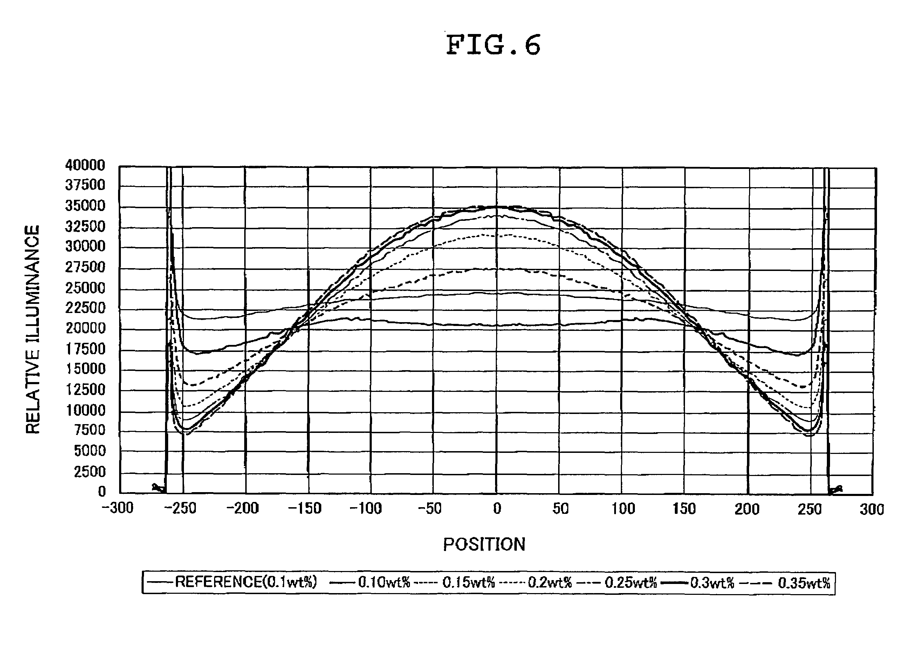

Table 1 below shows the measurements of the middle-high ratio and the light use efficiency, and Fig. 6 illustrates the measurements of the relative illuminance distributions. In Fig. 6, the vertical axis indicates the relative illuminance, and the horizontal axis indicates the distance [mm] from the center of the light guide plate.

**<Table 1>**

| Density [wt%] | Reference | 0.096 | 0.063 | 0.079 | 0.096 | 0.113 | 0.129 |
|---|---|---|---|---|---|---|---|
| Middle-high ratio | 87% | 79% | 48% | 33% | 26% | 22% | 20% |
| Light use efficiency | 100% | 86% | 94% | 98% | 101% | 103% | 104% |

Next, the light guide plate having the above configuration was used to measure relative illuminance distribution, middle-high ratio, and light use efficiency by varying the particle density Npo of the first layer 60 to various values, specifically, 0.00 wt%, 0.030 wt%, 0.046 wt%, 0.050 wt%, 0.053 wt%, and 0.056 wt%, with the particle density Npr of the second layer 62 fixed to 0.096 wt%. By way of reference, measurements were also made using a light guide plate having a single particle density of 0.046 wt% in both the first layer 60 and the second layer 62, that is, a light guide plate containing scattering particles dispersed therein at a consistent density throughout, as in the preceding example.

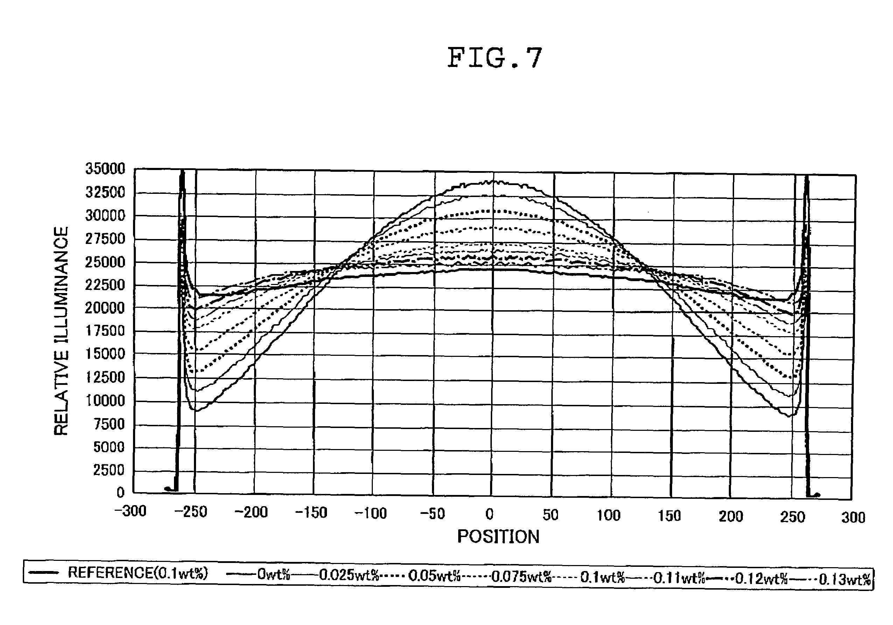

Table 2 below shows the measurements of the middle-high ratio and the light use efficiency, and Fig. 7 illustrates the measurements of the relative illuminance distributions. In Fig. 7, the vertical axis indicates the relative illuminance, and the horizontal axis indicates the distance [mm] from the center of the light guide plate.

**<Table 2>**

| Density [wt%] | Reference | 0.000 | 0.030 | 0.046 | 0.050 | 0.053 | 0.056 |
|---|---|---|---|---|---|---|---|
| Middle-high ratio | 87% | 26% | 43% | 65% | 70% | 77% | 83% |
| Light use efficiency | 100% | 101% | 103% | 104% | 104% | 104% | 104% |

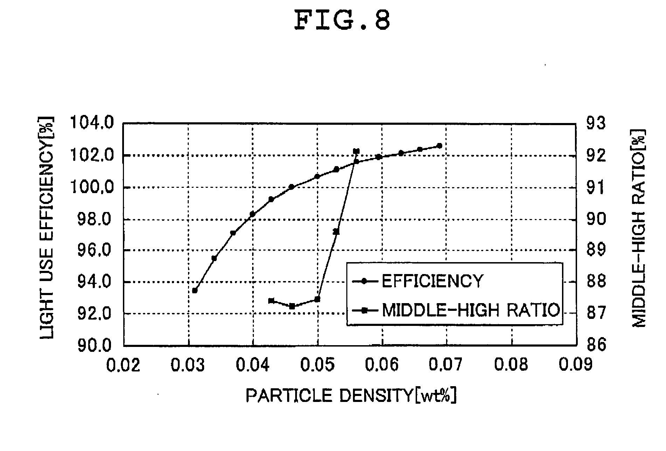

Now, the light guide plates used for reference in the above examples will be described referring to Fig. 8. Fig. 8 is a graph illustrating relationships between particle density of the light guide plate on the one hand and light use efficiency and middle-high ratio observed in the light emitted through the light exit plane of the light guide plate on the other hand. In Fig.8, the vertical axis indicates the light use efficiency [%] and the middle-high ratio [%], and the horizontal axis indicates the particle density [wt%].

The relationships illustrated in Fig. 8 between particle density of the light guide plate on the one hand and light use efficiency and middle-high ratio observed in the light emitted through the light exit plane of the light guide plate on the other hand were obtained using a plurality of light guide plates each fabricated with a consistent particle density throughout therein but different from the particle density of the other light guide plates, that is, these light guide plates are not divided into a first layer and a second layer. Light emitted through the light exit plane of these light guide plates were measured to calculate the light use efficiency and the middle-high ratio in the manner described above.

It appears from Fig. 8 that when a light guide plate contains scattering particles dispersed at a constant density throughout therein, the middle-high ratio is highest at the particle density of 0.46 wt%, i.e., the particle density of the scattering particles in the light guide plate used for reference, while keeping the light use efficiency at a high level. In brief, when the light guide plate has scattering particles dispersed at a consistent density throughout, the light guide plate used for reference yields a high light use efficiency and the highest middle-high ratio.

Note that although Fig. 8 does not show the middle-high ratio for a range under 0.040 wt%, a middle-high ratio anywhere in that range is not higher than at 0.046 wt% while the light use efficiency decreases in that range.

Tables 1 and 2 and Figs. 6 and 7 show that the light guide plate having different particle densities in the first layer and the second layer emits light representing a more accentuated high-in-the-middle brightness curve through its light exit plane than the light guide plate as exemplified by the light guide plate used for reference having scattering particles dispersed at a consistent density throughout therein. Thus, the configuration essentially composed of the first layer and the second layer respectively having different particle densities enable various illuminance distributions to be achieved without the need to alter the shape of the light guide plate such that even the light guide plate adapted to have increased dimensions can emit light with a desired middle-high ratio.

Further, as illustrated in Table 2 and Fig. 7, when the particle density Npo in the first layer and the particle density Npr in the second layer are adapted to satisfy 0 wt% ≤ Npo ≤0.15wt% and 0.008 wt% < Npr < 0.4 wt%, a higher middle-high ratio can be achieved with an enhanced light use efficiency as compared with the optimum example of the light guide plate used for reference yielding a high light use efficiency and the highest middle-high ratio among the light guide plates each having a consistent particle density throughout therein.

The advantageous effects produced by the present invention are obvious from the above description.

While component parts of the light guide plate and the planar lighting device have been described above in detail, the invention is not limited to those described above.

For example, although the interface z between the first layer on the side closer to the light exit plane and the second layer on the side closer to the rear plane (the plane located opposite from the light exit plane) is provided between the light exit plane and the rear plane according to the above embodiment, the invention is not limited to such a configuration; the position of the interface z in the direction perpendicular to the light exit plane is not limited specifically, provided that the light guide plate is essentially composed of two layers, the first layer on the side thereof closer to the light exit plane and the second layer on the side thereof closer to the rear plane.

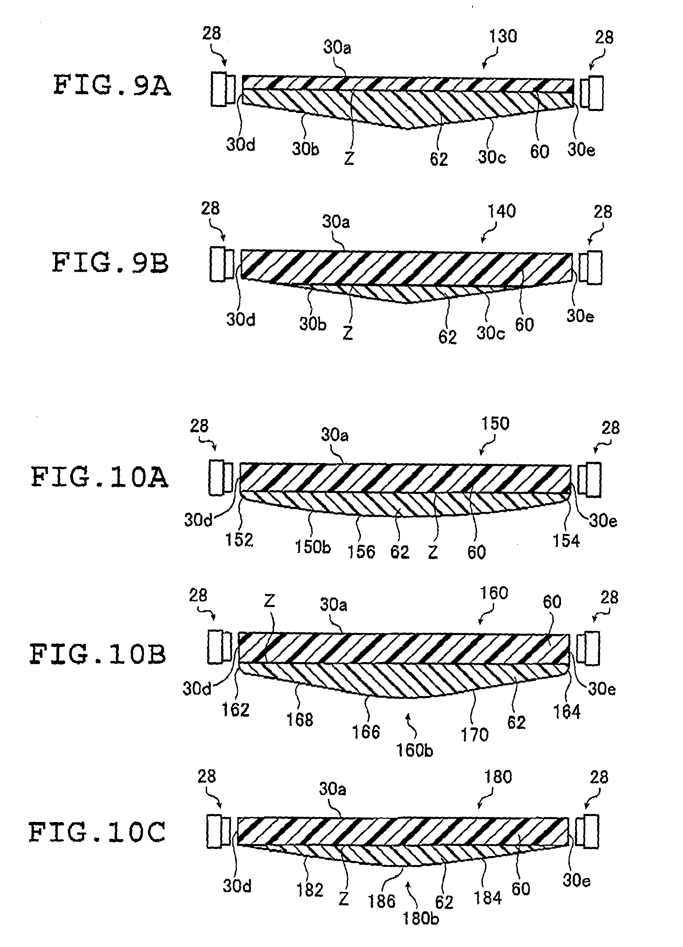

Figs. 9A and 9B are schematic sectional views illustrating other examples of planar lighting device using the inventive light guide plate.

A light guide plate 130 illustrated in Fig. 9A has the interface z formed in a position such that its two opposite sides are contained by the first light entrance plane 30d and the second light entrance plane 30e, respectively. In other words, the light guide plate 130 is essentially composed of the first layer 60 forming part of the light entrance planes (the first light entrance plane 30d and the second light entrance plane 30e) and the second layer 62 forming part of the light entrance planes and the rear plane (the first inclined plane 30b and the second inclined plane 30c) and having a particle density higher than that of the first layer 60, with the interface z between the two layers.

A light guide plate 140 illustrated in Fig. 9B has the interface z formed in a position such that its two opposite sides are contained by the rear plane (the first inclined plane 30b and the second inclined plane 30c). In other words, the light guide plate 140 is essentially composed of the first layer 60 forming the light entrance planes and part of the rear plane and the second layer 62 forming part of the rear plane and having a particle density higher than that of the first layer 60, with the interface z between the two layers.

Thus, when the particle density in the second layer is adapted to be higher than that of the first layer, the combined particle density gradually increases with the increasing distance from the light entrance planes and, therefore, light reflected by the effects of the scattering particles toward the light exit plane increases with the increasing distance from the light entrance planes, with the result that an illuminance distribution that is high in the middle with a desirable proportion can be obtained as in the case where the interface z is provided at the boundary between the light entrance planes and the rear plane, whether the interface z is provided closer to the light entrance planes or closer to the rear plane.

While the interface z between the first layer and the second layer is a flat plane parallel to the light exit plane according to the embodiment under discussion, the invention is not limited thereto; the interface may be an inclined plane or a curved plane. For example, the interface may be a plane bisecting the thickness of the light guide plate, i.e., a plane lying in the middle between the light exit plane and the inclined plane and may be a plane parallel to the inclined plane.

In the embodiment under discussion, the light exit plane 30a of the light guide plate 30 has the longer sides where the light exit plane 30a and the light entrance planes intersect and the shorter sides where the light exit plane 30a and the lateral planes intersect in order to emit light through the light exit plane with an enhanced brightness and efficiency. The invention, however, is not limited to such a configuration; the light exit plane may be formed into a square; or the sides thereof adjacent the light entrance planes may be the shorter sides and the sides thereof adjacent the lateral planes may be the longer sides.

The joint between the first inclined plane and the second inclined plane of the light guide plate preferably has a rounded shape (i.e., a curved portion). Where the joint between the first inclined plane and the second inclined plane of the light guide plate has a rounded shape connecting the two planes smoothly, generation of brightness unevenness observed as, for example, a bright line on the line of intersection between the first inclined plane and the second inclined plane can be prevented. While, in the embodiment under discussion, the inclined planes of the light guide plate are defined by a straight line in cross section, the shape of the first inclined plane and the second inclined plane, i.e., the underside of the light guide plate, is not limited specifically. The first inclined plane and the second inclined plane may be defined by a curved surface or each of them may have two or more inclined sections. In other words, each inclined plane may have inclined sections each having different inclination angles according to their position. Further, the inclined planes may be curved outwardly or inwardly with respect to the light exit plane, or may have outwardly and inwardly curved sections combined.

The inclined planes preferably have a configuration such that their inclination angle with respect to the light exit plane decreases from the light entrance planes toward the center of the light guide plate or toward a position where the light guide plate is thickest. Where the inclination angle of the inclined planes gradually decreases, light having less brightness unevenness can be emitted through the light exit plane.

The inclined planes more preferably have an aspherical cross section that may be expressed by a 10-th order polynomial. Where the inclined planes have such a configuration, light having less brightness unevenness can be emitted regardless of the thickness of the light guide plate.

Figs. 10A and 10B are schematic sectional views illustrating other examples of planar lighting device using the inventive light guide plate.

A light guide plate 150 illustrated in Fig. 10A has a rear plane 150b composed of a first curved plane 152 and a second curved plane 154 connecting with the first light entrance plane 30d and the second light entrance plane 30e, respectively, and a third curved plane 156 connecting with the first curved plane 152 and the second curved plane 154. The rear plane 150b is parallel to the light exit plane and symmetrical to a central axis or the bisector α bisecting the light exit plane 30a.

The first curved plane 152 and the second curved plane 154 represent curves represented or formed by a part of an ellipse in a cross section perpendicular to the longitudinal direction of the light entrance planes. The first light entrance plane 30d and the second light entrance plane 30e communicate smoothly with the first curved plane 152 and the second curved plane 154, respectively; the first curved plane 152 and the second curved plane 154 communicate smoothly with the third curved plane 156.

A light guide plate 160 illustrated in Fig. 10B has a rear plane 160b composed of a first curved plane 162 and a second curved plane 164 connecting with the first light entrance plane 30d and the second light entrance plane 30e, respectively; a first inclined plane 168 and a second inclined plane 170; and a third curved plane 166 connecting with the first inclined plane 168 and the second inclined plane 170. The rear plane 160b is symmetrical to a plane passing through the bisector α and perpendicular to the light exit plane 30a.

The first curved plane 162 and the second curved plane 164 represent curves represented by a part of an ellipse in a cross section perpendicular to the longitudinal direction of the light entrance planes. These planes communicate smoothly with each other.

Even with the rear plane that is not formed of a straight line or straight lines in cross section as illustrated in Figs. 2 and 9, a density distribution can be achieved where the combined particle density of the scattering particles in the direction perpendicular to the light exit plane increases with the increasing distance from the light entrance planes by forming the rear plane of the light guide plate as described above such that the distance from the light exit plane increases with the increasing distance from the light entrance planes and that the light guide plate is essentially composed of the first layer located on the side of the light guide plate closer to the light exit plane and the second layer located on the side of the light guide plate closer to the rear plane and having a particle density higher than that of the first layer. A high-in-the-middle brightness distribution can be achieved and the light use efficiency can be increased by kneading and dispersing the scattering particles into the light guide plate such that the combined particle density of the scattering particles in the direction perpendicular to the light exit plane increases with the increasing distance from the light entrance planes.

Further, the interface z need not necessarily be positioned at the boundary between the light entrance planes and the rear plane; as illustrated in Fig. 9, the interface z may be positioned closer to the light entrance planes or to the rear plane.

The high-in-the-middle brightness distribution can be achieved and the light use efficiency can be increased even when the rear plane of the light guide plane is configured such that the distance from the light exit plane increases with the increasing distance from the light entrance planes, provided that the combined particle density of the scattering particles in the direction perpendicular to the light exit plane increases with the increasing distance from the light entrance planes. However, kneading and dispersing the scattering particles into a flat light guide plate such that the particle density has a distribution is difficult and increases the manufacturing costs.

Thus, the particle density can be easily given a distribution wherein the combined particle density of the scattering particles in the direction perpendicular to the light exit plane increases with the increasing distance from the light entrance planes by configuring the rear plane of the light guide plane such that the distance from the light exit plane increases with the increasing distance from the light entrance planes and that the light guide plate is essentially composed of the first layer located on the side of the light guide plate closer to the light exit plane and the second layer located on the side of the light guide plate closer to the rear plane and having a particle density higher than that of the first layer.

Further, the rear plane of the light guide plane permits various configurations, provide that that the distance from the light exit plane increases with the increasing distance from the light entrance planes. Thus, one may use a combination of the shape of the rear plane of the light guide plate and the position of the interface z to obtain a more preferable distribution of the combined particle density in the direction perpendicular to the light exit plane and, hence, a more preferable brightness distribution, which increases the light use efficiency.

Now, description will be made in more detail referring to specific examples below.

Examples described below used light guide plates that are employed for screens each measuring 22 inches (288 mm x 500 mm) and 65 inches (830 mm x 1466 mm) to measure relative illuminance distribution and light use efficiency by changing the thickness of the first layer, the particle density of the second layer, and the shape of the rear plane.

Specifically, the light guide plates used had the light entrance planes forming the lateral planes thereof located on the longer sides and were each composed of two layers. The distance from the light exit plane to the rear plane on the bisector α, i.e., the thickest portion, was 0.9 mm; the thickness of the light guide plate at the light entrance planes, i.e., the thinnest portion, measured 0.5 mm; and the particle density of the first layer was 0 [wt%].

In the light guide plates each having the above geometry, the thickness of the first layer or the distance from the light exit plane to the interface z, the particle density of the second layer, and the shape of the rear plane were changed. The thickness of the first layer was changed among 0.5 mm, 0.3 mm and 0.2 mm; the particle density of the second layer was changed among 0.1 wt%, 0.2 wt%, 0.3 wt%, and 0.4 wt%; and the shape of the rear plane was changed among a shape as illustrated in Fig. 10C composed of inclined planes 182, 184 and a curved portion 186 joining them (referred to as "taper and circle" below), a shape formed by a part of an ellipse (referred to as "ellipse" below), and a shape as illustrated in Fig. 10A formed by a part of an ellipse and a part of a circle (referred to as " ellipse and circle" below).

First, the light guide plate for a 22-inch screen will be described.

The curved portion of the taper and circle type rear plane has a radius of curvature of 18000 mm, the minor axis of the ellipse of the ellipse type rear plane is 0.4 mm, the minor axis of the elliptical portion of the ellipse and circle type rear plane is 0.3 mm, and the circular portion thereof has a radius of curvature of 30000 mm.

As reference, measurements were made also of a mono-layered light guide plate having the same shape as the above light guide plate with the taper and circle type rear plane. The particle density was 0.25 wt%.

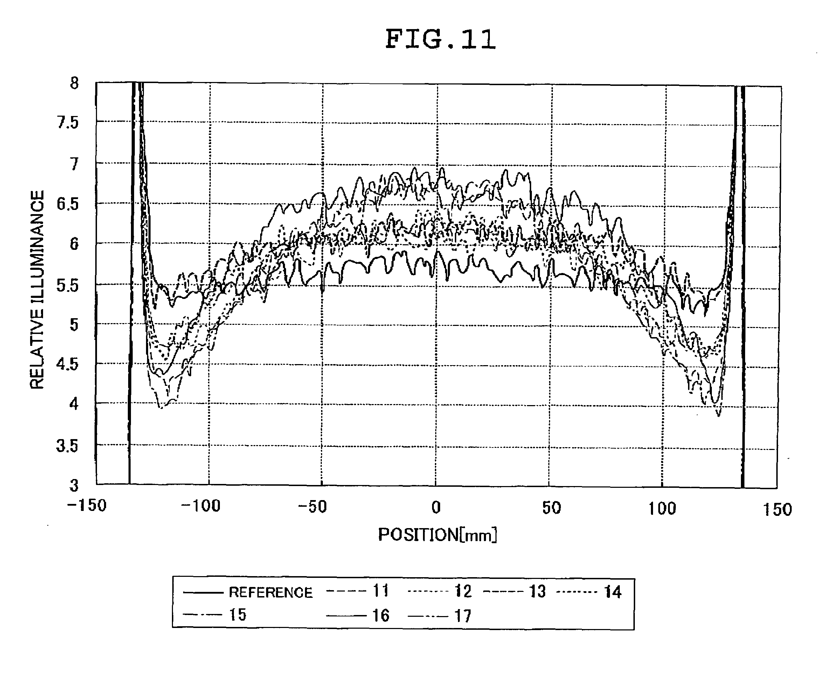

Table 3 gives measurements of light use efficiency; Fig. 11 illustrates measurements of relative illuminance distributions. In Fig. 11, the vertical axis indicates relative illuminance and the horizontal axis indicates distance [mm] from the center of the light guide plate.

As described in an example given earlier, the light use efficiency in this example denotes the sum of intensity of light emitted through the entire light exit plane of the light guide plate expressed in percentage as compared with the reference taken to be 100 %.

**<Table 3>**

| | | Examples | | | | | | | Reference |
|---|---|---|---|---|---|---|---|---|---|
| | | 11 | 12 | 13 | 14 | 15 | 16 | 17 | |
| Thickness of first layer | [mm] | 0.3 | 0.2 | 0.2 | 0.2 | 0.3 | 0.3 | 0.2 | - |
| Particle density of second layer | [wt%] | 0.4 | 0.3 | 0.4 | 0.3 | 0.3 | 0.4 | 0.3 | - |
| Shape of rear plane | | Taper and circle | | | ellipse | Ellipse and circle | | | Taper and circle |
| Light use efficiency | [%] | 101.7 | 100 | 104.8 | 104.8 | 100.3 | 105.5 | 101.4 | 100 |

Next, the light guide plate for a 65-inch screen will be described.

The curved portion of the taper and circle type rear plane has a radius of curvature of 120000 mm, the minor axis of the ellipse of the ellipse type rear plane is 0.4 mm, the minor axis of the elliptical portion of the ellipse and circle type rear plane is 0.3 mm, and the circular portion thereof has a radius of curvature of 250000 mm.

As reference, measurements were made also of a mono-layered light guide plate having the same shape as the above light guide plate with the taper and circle type rear plane. The particle density was 0.0875 wt%.

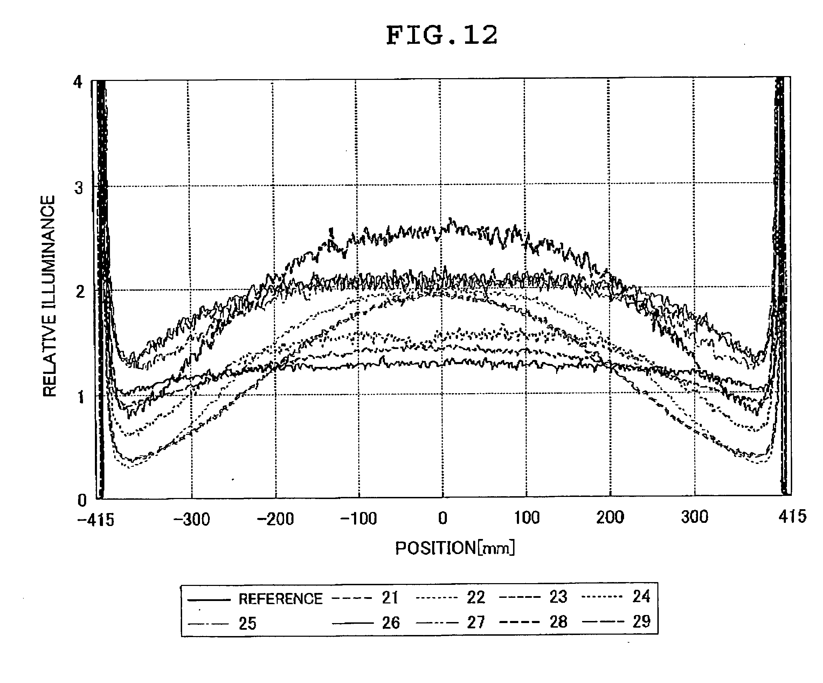

Table 4 gives measurements of light use efficiency; Fig. 12 illustrates measurements of relative illuminance distributions. In Fig. 11, the vertical axis indicates relative illuminance and the horizontal axis indicates distance [mm] from the center of the light guide plate.

**<Table 4>**

| | | Examples | | | | | | | | | Reference |
|---|---|---|---|---|---|---|---|---|---|---|---|
| | | 21 | 22 | 23 | 24 | 25 | 26 | 27 | 28 | 29 | |
| Thickness of first layer | [mm] | 0.5 | 0.5 | 0.2 | 0.5 | 0.3 | 0.2 | 0.5 | 0.3 | 0.2 | - |
| Particle density of second layer | [wt%] | 0.2 | 0.3 | 0.1 | 0.2 | 0.1 | 0.1 | 0.2 | 0.2 | 0.1 | - |
| Shape of rear plane | | Taper and circle | | | ellipse | | | Ellipse and circle | | | Taper and circle |
| Light use efficiency | [%] | 101 | 109 | 103 | 105 | 100 | 104 | 104 | 111 | 103 | 100 |

It appears from Tables 3 and 4 and Figs. 11 and 12 that even when the position of the interface z is changed, a high-in-the-middle brightness distribution can be achieved and the light use efficiency can be increased if the light guide plate has a two-layer configuration such that the second layer has a higher particle density than the first layer. In addition, since the first layer has a low particle density, the amount of the overall scattering particles used can be smaller than otherwise, leading to reduced manufacturing costs.

Further, a high-in-the-middle brightness distribution can be achieved and the light use efficiency can be increased even when the shape of the rear plane is changed, provided that the distance from the light exit plane increases with the increasing distance from the light entrance planes.

Further, the illuminance distribution can be changed by varying the shape of the rear plane and the position of the interface z. Thus, even when the light guide plate is adapted to have larger dimensions, light can be emitted with a distribution having a desired middle-high ratio.

Although the light guide plate has a two-layer configuration having different particle densities of the scattering particles in the above embodiment, the invention is not limited thereto, provided that the light guide plate has a multi-layer configuration. In such a configuration, the closer a given layer is to the light exit plane, the lower the particle density of the scattering particles is; that is, the closer a given layer is to the rear plane, the higher the particle density of the scattering particles is. A high-in-the-middle brightness distribution can be achieved and the light use efficiency can be increased even with a multi-layer light guide plate where the closer a given layer is to the rear plane, the higher the particle density thereof is.

Thus, the combined particle density in a direction perpendicular to the light exit plane can be given a distribution wherein the particle density increases with the increasing distance from the light entrance planes by configuring the light guide plate such that the distance of the rear plane from the light exit plane increases with the increasing distance from the light entrance planes and that the light guide plate has a two-layer configuration composed of the first layer on the side of the light guide plate closer to the light exit plane and the second layer located on the side of the light guide plate closer to the rear plane and having a particle density higher than that of the first layer. Thus, a high-in-the-middle brightness distribution can be obtained and the light use efficiency can be improved.

While, in all the above embodiments, the light guide plate has a configuration growing thicker with the increasing distance from the light entrance planes, the invention is not limited thereto; the shape of the light guide plate is not limited specifically, provided that the light guide plate is composed of two layers, the first layer located on the side closer to the light exit plane and the second layer located on the side closer to the rear plane (opposite plane from the light exit plane) such that the first layer has a lower particle density than the second layer.

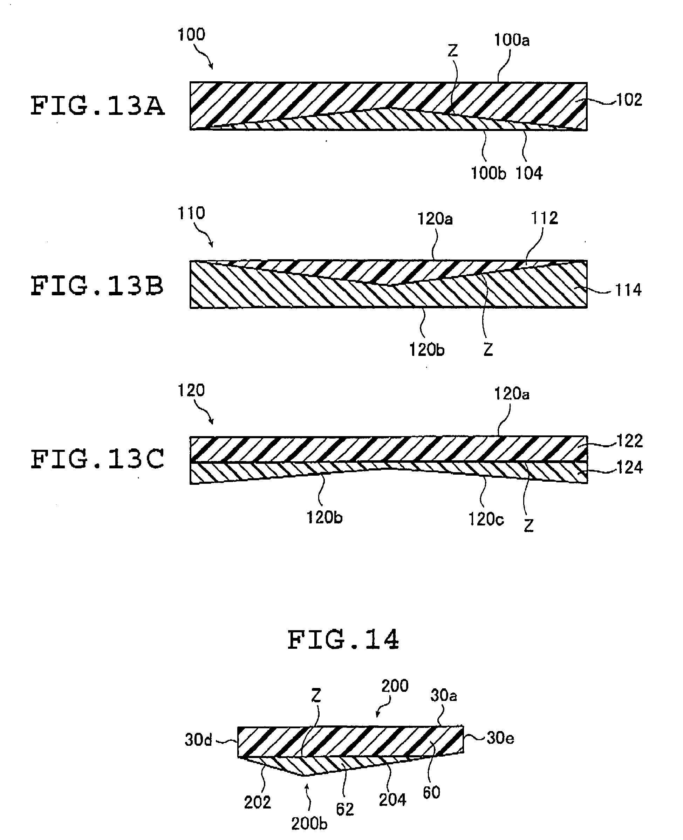

Figs. 13A to 13C are schematic sectional views illustrating other examples of the light guide plate of the invention.

A light guide plate 100 illustrated in Fig. 13A is flat with a light exit plane 100a parallel to a rear plane 100b. The light guide plate 100 also has a two-layer structure composed of a first layer 102 located on the side closer to the light exit plane 100a and a second layer 104 located on the side closer to the rear plane 100b. An interface 106 between the first layer 102 and the second layer 104 touches the rear plane 100b at both ends thereof (light entrance planes) and is so inclined as to approach the light exit plane 100a with the increasing distance from aforementioned ends toward the center of the light guide plate. Thus, the second layer has a cross section in the form of an equilateral triangle having its vertex on the side thereof closer to the light exit plane 110a, with its base defining the rear plane 100b.

Thus, the light guide plate that is flat and has the second layer in the form of an equilateral triangle in cross section also achieves emission of light having a high-in-the-middle illuminance distribution and brightness distribution even where the light exit plane is adapted to have increased dimensions, as in the cases described earlier.

A light guide plate 110 illustrated in Fig. 13B is flat with a light exit plane 110a parallel to a rear plane 110b. The light guide plate 110 also has a two-layer structure composed of a first layer 112 located on the side closer to the light exit plane 110a and a second layer 114 located on the side closer to the rear plane 110b. An interface 116 between the first layer 112 and the second layer 114 touches the light exit plane 110a at both ends thereof (light entrance planes) and is so inclined as to approach the rear plane 110b with the increasing distance from aforementioned ends toward the center of the light guide plate. Thus, the first layer has a cross section in the form of an equilateral triangle having its vertex on the side closer to the rear plane 110b, with its base defining the light exit plane 110a.

Thus, the light guide plate that is flat and has the first layer in the form of an equilateral triangle in cross section also achieves emission of light having a high-in-the-middle illuminance distribution even where the light exit plane is adapted to have increased dimensions, as in the cases described earlier.

A light guide plate 120 illustrated in Fig. 13C has a configuration such that the plane opposite from a light exit plane 120a is composed of two inclined planes 120b and 120c approaching the light exit plane 120a with the increasing distance from the ends, at which the light entrance planes are located, toward the center. The light guide plate 120 also has two stacked layers, a first layer 122 located on the side closer to a light exit plane 120a and a second layer 124 located on the side closer to a rear plane 120b. An interface 126 between the first layer 122 and the second layer 124 is a flat plane spaced a given distance from the light exit plane 120a and parallel to the light exit plane 120a. Accordingly, the first layer 122 has the shape of a flat plate.

Thus, the light guide plate having the above configuration also achieves emission of light having a high-in-the-middle illuminance distribution as in the cases described earlier when the light guide plate has a two-layer configuration, one layer located on the side closer to the light exit plane and the other layer located on the side closer to the rear plane (opposite plane from the light exit plane), such that the two stacked layers have different densities of scattering particles, even where the light guide plate is adapted to have increased dimensions.

Although the rear plane is described as being symmetrical in the above examples, the invention is not limited thereto; the rear plane may be asymmetrical.

Fig. 14 is a sectional view illustrating another example of the inventive light guide plate.

A light guide plate 200 illustrated in Fig. 14 has a rear plane 200b composed of a first inclined plane 202 on the side closer to the first light entrance plane 30d and a second inclined plane 204 closer to the second light entrance plane 30e. The first inclined plane 202 and the second inclined plane 204 join each other at a position (where the light guide plate 200 is thickest) on the side of the center of the light guide plate closer to the first light entrance plane 30d. Thus, the rear plane 200b of the light guide plate has an asymmetrical shape where the joint between the first inclined plane 30b and the second inclined plane 30c of the light guide plate 30 illustrated in Fig. 3 is formed closer to the first light entrance plane 30d.

The interface z between the first layer 60 and the second layer 62 having a higher particle density than the first layer is formed at the boundary between the first light entrance plane 30d and the first inclined plane 202 so as to be parallel to the light exit plane 30a and meets the second inclined plane 204.

Thus, also where the rear plane is adapted to be asymmetrical, light can be emitted with a high-in-the-middle brightness distribution even when the light exit plane is adapted to have increased dimensions as earlier described by forming the light guide plate so as to have a two-layer configuration where the layer on the side closer to the light exit plane has a different particle density from that of the layer on the side closer to the rear plane such that the layer on the side closer to the rear plane has a higher particle density.

Even when the rear plane of the light guide plate has an asymmetrical configuration, the position of the interface z is not limited specifically, provided that the light guide plate is composed of two layers, the first layer located on the side closer to the light exit plane and the second layer located on the side closer to the rear plane and having a higher particle density than the first layer. The interface z may be provided closer to the first light entrance plane or closer to the first inclined plane.

Further, although the light guide plate described above has two light entrance planes, only one light entrance plane is preferably provided when the light guide plate has an asymmetrical rear plane. That is, the light source is preferably disposed opposite the only light entrance plane provided. In this configuration, the light entrance plane may be provided where the first light entrance plane is located, i.e., the light entrance plane closer to the thickest portion of the light guide plate or may be provided where the second light entrance plane is located, i.e., the light entrance plane farther from the thickest portion of the light guide plate. Thus, even where only one light entrance plane is provided, light can be emitted with a high-in-the-middle brightness distribution even when the light exit plane is adapted to have increased dimensions as earlier described.

While the inventive planar lighting device has been described above in detail, the invention is not limited in any manner to the above embodiments and various improvements and modifications may be made without departing from the spirit of the present invention.

For example, the light guide plate may be fabricated by mixing a plasticizer into a transparent resin.

Fabricating the light guide plate from a material thus prepared by mixing a transparent material and a plasticizer provides a flexible light guide plate, allowing the light guide plate to be deformed into various shapes. Accordingly, the surface of the light guide plate can be formed into various curved surfaces.

Where the light guide plate is given such flexibility, the light guide plate or the planar lighting device using the light guide plate can even be mounted to a wall having a curvature when used, for example, for a display board employing ornamental lighting (illuminations). Accordingly, the light guide plate can be used for a wider variety of applications and in a wider application range including ornamental lighting and POP (point-of-purchase) advertising.

Said plasticizer is exemplified by phthalic acid esters, or, specifically, dimethyl phthalate, diethyl phthalate(DEP), dibutyl phthalate (DBP), di(2-ethylhexyl) phthalate (DOP (DEHP)), di-n-octyl phthalate (DnOf), diisononyl phthalate (DINP), dinonyl phthalate (DNP), diisodecyl phthalate (DIDP), phthalate mixed-base ester (C₆ to C₁₁) (610P, 711P, etc.) and butyl benzyl phthalate (BBP). Besides phthalic acid esters, aforementioned plasticizer is also exemplified by dioctyl adipate (DOA), diisononyl adipate (DINA), dinormal alkyl adipate (C_{6, 8, 10}) (610A), dialkyl adipate (C_{7, 9}) (79A), dioctyl azelate(DOZ), dibutyl sebacate(DBS), dioctyl sebacate (DOS), tricresyl phosphate (TCP), tributyl acetylcitrate (ATBC), epoxidized soybean oil (ESBO), trioctyl trimellitate (TOTM), polyesters, and chlorinated paraffins.

## Claims

1. A light guide plate comprising:
a rectangular light exit plane;
a light entrance plane containing a side of said light exit plane;
a rear plane located on a side opposite from said light exit plane; and
scattering particles for scattering light propagating inside said light guide plate, dispersed within said light guide plate,
said light guide plate further comprising:
a first layer positioned on a side closer to said light exit plane and having a first particle density of said scattering particles; and
a second layer positioned on a side closer to said rear plane and having a second particle density of said scattering particles different from said first particle density of said first layer,
wherein Npo and Npr satisfy Npo < Npr, where Npo is said first particle density of said scattering particles in said first layer and Npr is said second particle density of said scattering particles in said second layer.

2. The light guide plate according to Claim 1, wherein a combined particle density of said scattering particles differs in a direction perpendicular to said light entrance plane.

3. The light guide plate according to Claim 1 or 2, wherein said light entrance plane is provided on a longer side of said light exit plane.

4. The light guide plate according to any one of Claims 1 to 3, wherein said light entrance plane is provided on one side of said light exit plane.

5. The light guide plate according to any one of Claims 1 to 3, further comprising the other light entrance plane containing the other side of said light exit plane,
wherein said light entrance plane and the other light entrance plane are provided on two opposite sides of said light exit plane, respectively.

6. A light guide plate comprising:
a light exit plane being flat and rectangular;
two light entrance planes disposed opposite each other so as to contain two opposite longer sides of said light exit plane; respectively,
a rear plane being symmetrical and being increasingly distanced from said light exit plane with an increasing distance from said two light entrance planes toward a center of said light exit plane; and
scattering particles for scattering light propagating inside said light guide plate, dispersed within said light guide plate,
said light guide plate further comprising:
a first layer positioned on a side closer to said light exit plane and having a first particle density of said scattering particles; and
a second layer positioned on a side closer to said rear plane and having a second particle density of said scattering particles different from said first particle density of said first layer,
wherein Npo and Npr satisfy Npo < Npr, where Npo is said first particle density of said scattering particles in said first layer and Npr is said second particle density of said scattering particles in said second layer.

7. The light guide plate according to Claim 6, wherein said first layer and said second layer has an interface parallel to said light exit plane.

8. The light guide plate according to Claim 6 or 7, wherein sides of said interface between said first layer and said second layer are located at boundaries between said light entrance planes and said rear plane.

9. The light guide plate according to Claim 6 or 7, wherein two opposite sides of said interface between said first layer and said second layer are contained by said light entrance planes.

10. The light guide plate according to Claim 6 or 7, wherein two opposite sides of said interface between said first layer and said second layer are contained by said rear plane.

11. The light guide plate according to any one of Claims 6 to 10, wherein said rear plane is comprises two inclined planes connecting respectively with said light entrance planes and inclined with respect to said light exit plane.

12. The light guide plate according to any one of Claims 6 to 10, wherein said rear plane comprises two inclined planes connecting respectively with said light entrance planes and inclined with respect to said light exit plane and a curved portion joining the two inclined planes.

13. The light guide plate according to any one of Claims 6 to 10, wherein said rear plane comprises curves each represented by a part of an ellipse respectively connecting with said light entrance planes, straight lines respectively connecting with said curves each represented by a part of an ellipse, and a curve represented by a part of a circle connecting with said straight lines in a cross section perpendicular to a longitudinal direction of said light entrance planes.

14. The light guide plate according to any one of Claims 6 to 10, wherein said rear plane comprises curves each represented by a part of an ellipse respectively connecting with said light entrance planes and a curve represented by a part of a circle joining said curves each represented by a part of an ellipse in a cross section perpendicular to a longitudinal direction of said light entrance planes.

15. The light guide plate according to any one of Claims 6 to 14, wherein, when a thickness of said first layer is T1 and a thickness of said light guide plate at said light entrance planes is T2, said thickness T1 and the thickness T2 satisfy 0.3 < T1/T2 < 2.

16. The light guide plate according to any one of Claims 1 to 15, wherein said first and second particle densities Npo and Npr satisfy 0wt% ≤ Npo ≤ 0.15 wt% and 0.008 wt% < Npr < 0.4 wt%.

17. The light guide plate according to any one of Claims 1 to 15, wherein said first and second particle densities Npo and Npr satisfy Npo = 0 and 0.015 wt% < Npr < 0.75 wt%.
